# EUROPEAN PATENT SPECIFICATION

(11) **EP 1 432 646 B1**
(45) Date of publication and mention of the grant of the patent: **15.08.2007**
(21) Application number: 01975025.6
(22) Date of filing: 10.09.2001
(51) Int. Cl.: C02F 1/00, B01D 37/04

(54) **SELF CONTAINED WATER FILTER HAVING ZEOLITES, FILTRATION MEMBRANES AND WATER FLOW RATE CONTROL MEANS**
EINGEBAUTER WASSERFILTER MIT ZEOLITHEN, FILTRATIONMEMBRANEN UND WASSERDURCHFLUSSREGELUNGSMITTELN
FILTRE A EAU AVEC ZEOLITES, MEMBRANES DE FILTRATION ET DISPOSITIF DE REGULATION DU DEBIT D'EAU

(43) Date of publication of application: 30.06.2004
(73) Proprietor: AquaEst International B.V., 8034 PV Zwolle (NL)
(72) Inventor: BOELHOUWER, Willem, Pieter, NL-8034 PV Zwolle (NL); DAUTZENBERG, David, Jan, Willem, NL-2954 PA Alblasserdam (NL); VAN HOOF, Jacobus, Jan, Wilhelmus, Maria, NL-5663 SN Geldrop (NL)
(74) Representative: Klavers, Cornelis
(86) International application number: PCT/NL2001/000665
(87) International publication number: WO 2003/022745

(56) References cited:
- EP-A- 0 668 243
- DE-A- 2 917 134
- DE-A- 4 422 709
- FR-A- 2 780 718
- US-A- 3 823 824
- US-A- 5 643 444
- US-A- 6 120 686
- PATENT ABSTRACTS OF JAPAN vol. 008, no. 134 (C-230), 21 June 1984 (1984-06-21) & JP 59 046185 A (MARUCHIYUU BOUEKI KK), 15 March 1984 (1984-03-15)
- DATABASE WPI Derwent Publications Ltd., London, GB; AN 1989-071542 XP002198229 & JP 01 022393 A (KYIRITSU HOUSEHEEL KK), 25 January 1989 (1989-01-25)
- PATENT ABSTRACTS OF JAPAN vol. 017, no. 638 (C-1133), 26 November 1993 (1993-11-26) & JP 05 200386 A (NGK INSULATORS LTD), 10 August 1993 (1993-08-10)

## Description

The present invention relates to a water filter comprising a water processor vessel filled with filter constituents, including activated carbon and filtration elements, which water processor vessel has a water input near its lower side and a water output near its upper side for providing an upstream water flow through said vessel, the water filter further comprising flow rate control means for controlling the upstream water flow through said vessel.

The present invention also relates to a water treatment system and a water processor vessel suited for application in the water filter or system.

A water filter included in a large scale water treatment system is known from WO 96/20139. The known system comprises a pre-treatment unit having one or more sorption filters with replaceable cartridges; a primary treatment unit having a modified zeolite bed, a cation exchanger bed, and an activated carbon bed, a part of which is in bactericidal/silver form ; and a finishing treatment unit having cartridges with micro-filtration elements. All units are coupled through a tubing system wherein shutters are included. The known water treatment system is an elaborate and advanced system involved in the scientific research related to the treatment of water containing toxic contaminants, including heavy metals, organo-phosphorus and organo-chlorine contaminants and pathogenic microorganisms.

EP-A-0668243 a water filter comprising a water processor vessel filled with filter constituents comprising activated carbon and filtration elements in the form of fine filter materials. The water processor vessel has a water input near its lower side and a water output near its upper side for providing an upstream water flow through said vessel. Together with a removable water can the water filter connected to the can forms part of a water treatment system or unit, which system comprises flow rate control means being a controlled pump, which is positioned outside the water filter. The pump is being controlled by pump control means for controlling the upstream water flow through said vessel at such a rate that a wanted low degree of contamination of processed output water is achieved.

US-A-6120686 discloses a water filter comprising a water processor vessel filled with filter constituents, comprising activated carbon and filtration elements in the form of different filter materials, such as nitrate resin and silver granulars. The water processor vessel has a water input near its lower side and a water output near its upper side for providing an upstream water flow through said vessel. Flow rate control means formed as volume reduction means located at the lower side of the vessel, reduce the volume of water which is introduced into the filter. The water is pre-filtered by a layer of silica and then flows through a suspended particle filter made of plastic fiber wool, whereafter mini-filter means hold back germs or bacteria. Only thereafter the pre-filtered water is passed to the filter materials. Plastic fiber wool is also used in further suspended particle filters to prevent the filter materials from rinsing. This prior art document is used to delimit the claimed invention from.

DE 2917134 discloses a water filter comprising a water processor vessel filled with filter constituents, comprising activated carbon and filtration elements in the form of ion exchange resin. The water processor vessel has a water input near its lower side and a water output near its upper side for providing an upstream water flow through said vessel. The vessel comprises a metering device for measuring the speed of water flowing upstream through the vessel.

The known filters are however not suited to provide an small scale yet advanced water processing filter capable of being applied with means operating to reduce the degree of organism contamination, in particular infections originating from micro organisms, such as bacteria, viruses, proteins and the like.

Therefore it is an object of the present invention to provide an elaborate water filter, also suited for private households and small communities, which filter is capable of meeting the world health standards for drinking water during a prolonged period of time.

Thereto the water filter according to the invention is characterised in that the filter constituents further comprise a zeolite blend, that the filtration elements are membrane filters, including micro membrane and/or ultra membrane fibres, and that the flow rate control means are coupled to the upper side of the water processor vessel for controlling the upstream water flow through said vessel at such a rate that a wanted low degree of full spectrum contamination of processed output water is achieved.

It is an advantage of the water filter according to the invention that the upstream water flow through the vessel or barrel and the filter constituents in particular zeolite(s) blend, carbon and filtration element(s) included therein, promote an effective and evenly spread movement of water to be processed across the area of the constituents, against the forces of gravity and upwards through the vessel. This results in an improved multistage filter action and output water quality, because the water to be processed is prevented from falling through the filter, like in a downstream gravity filter, which falling through usually occurs in a concentrated, polluted and thus earlier exhausted centre part of the filter constituents.

In addition the time during which the water to be treated resides in the water processing vessel and remains in contact with the filter constituents is advantageously prolonged in such an upstream operating water filter, such that a sufficiently long contamination exchange contact between the water and the filter constituents is guaranteed.

With the flow rate control means not only a stand-alone and autonomously operating water filter is realised, but with said flow control means usually connected near the water filter or possibly integrated therein, the minimum time can be defined during which the water to be treated by the water filter stays in contamination exchange contact with the filter constituents. This thus guarantees a minimum quality of water treated by the water filter according to the invention. That is why the water filter according to the invention is capable of meeting very high standards, such as the World Health Organisation standards for drinking/drinkable water.

Surprisingly it has been found by the inventors that the preferred position of the flow rate control means is close to the top of the water processor vessel, that is coupled to the upper side of the water processor vessel. This way given a sufficient input upstream water pressure an actually wanted water output of the water filter is never capable of emptying the water filter. Consequently the water filter according to the invention is of a type whereof the filter constituents are kept submerged. Consequently the above mentioned high standards can be met during a long period of time, because due to the fact that the filter constituents are under water a drying out or an infection thereof emanating from outside the filter, in particular due to bacteria, viruses and insects present in outside air is at least prevented, if not impossible.

Further advantageously the micro membranes are capable of removing macro particles such as from the sediments in the input water, but also micro particles such as bacteria and cists, for example crypto-sporidium, giardia cysts and the like. In addition the ultra membranes are capable of removing colloidal silica, and even viruses from the water. A further advantage of the bringing into action of micro-and/or ultra membrane filtration is that this reduces the dependency of the output water quality on the actual water flow rate controlled by the flow rate control means. In practise these membranes may be devised such that they define an upper boundary concerning the maximum possible output water flow rate given the actual content, amount and size of the water filter concerned. Apart from membranes which are usually flat, the filtration elements may also be embodied by filtration fibres, which may be formed into strands.

An embodiment of the water filter according to the invention is characterised in that the flow rate of the control means is controlled such that only a water output pressure which exceeds a minimum output water pressure threshold enables the water filter to output filtered water.

Advantageously the minimum output water threshold, which may be as low as 1 meter water column (= 0.1 bar), acts as a safety margin in order to always secure that the filter constituents are constantly submerged. In addition the vessel is kept under a constant over pressure, which keeps external contaminants outside the water filter, because these are not capable of entering the water filter else then through the input water which is being filtered and where from the contaminants are removed.

A still further embodiment of the water filter according to the invention is characterised in that the water filter comprises means arranged for promoting a uniform upstream water flow through the water processor vessel.

It is an advantage of the water filter according to the invention that the uniform water flow means promote an equally spread effective use and expenditure of the water filter constituents. This also leads to a more constant quality of water provided by the filter, which quality now is independent from the particular position at which the water passes through the area of the filter constituent stages.

In another embodiment the water filter according to the invention is characterised in that said uniform water flow means are flow diverting means.

These flow diverting means may be embodied as any known flow diverting means capable of promoting a wanted uniform water flow across the area of the vessel and over the height of the filter constituents included therein.

In a particularly simple though effective embodiment of the invention the flow diverting means are embodied as water flow area restrictions, which may be embodied by one or more narrowings of the inner area of the inside wall of the vessel. This has the advantage of preventing water in the vessel from escaping virtually unprocessed along the inside wall of the vessel such that the water will now evenly spread be properly processed by the filter constituents.

A preferred cost price optimised embodiment of the water filter according to the invention is characterised in that the expected water flow rate of the control means is related to the volume of the zeolite blend of the vessel. In practise it is preferred that the ratio between the expected average water flow rate in litres per minute and the volume in litres of the zeolite blend is 0.15 at the most.

In a further preferred embodiment of the water filter the volume of the zeolite blend in the water processor vessel lies between 3 and 30 litres, and in particular lies around 9 litres. In the latter case a housing of the water filter may have an external volume of approximately 80 litres making it particularly suited for application in private households, whereby in small communities larger or several water filters connected parallel may be more convenient.

In order to be able to replace and/or exchange the filter constituents after lapse of time or after the processing of a sufficient water volume the water filter according to the invention may be characterised further in that the zeolite blend and/or the activated carbon are/is included in one or more cartridges, which are releasable from the vessel. The cartridges or cassettes may then handy be sold separately while filled with newly manufactured or at least partly regenerated, re-activated or refurbished zeolite blend. This way the water filter is capable of treating 20 m3 water in for example approximately 6 month time, before the 9 litre zeolite cartridge has to be change in order to maintain a high quality of the processed water.

A variety of types of zeolites, zeolite combinations or zeolite additive combinations may be used as a blend in the water processor vessel or the cartridges. Examples of possible zeolites are: clinoptilolite, bentonite, phillipsite, chabasite, erionite, heulandite, mordenite, analsite, natrolite, montmorillonite and/or edingtonite. Advantageously additives may be added to the zeolite or the zeolite combinations, such as zand, caviar agricole, calcium, chloride or the like.

The effectiveness of the contamination reduction capabilities of the zeolite applied in the water filter according to the invention may be improved further by treating, possibly pre-treating or renewed treating the zeolite with a sodium containing solution at certain temperature, PH and during a specific treatment time. The effect hereof is that the zeolite becomes enriched with additional sodium atoms, which in turn are capable of being exchanged with atoms of the contaminants, including microorganisms, heavy metals and organic or inorganic compounds.

Further it is preferred that the water filter according to the invention comprises an carbon cartridge placed on top of the zeolite cartridge, in order to have bad odours, such as originating from organic compounds or the zeolites, withdrawn from the water processed by the zeolite.

Furthermore the activated carbon increases the PH of the output water, which makes the processed water softer. In addition it removes pesticides and herbicides from the water.

It is further preferred in an embodiment of the water filter according to the invention that at least a part of the activated carbon, is impregnated with silver, which is known for its an anti-bacterial effect.

A possible practical embodiment of the water filter according to the invention is characterised in that the water filter comprises a sedimentation chamber at the bottom of the water filter. Advantageously any residue present in the input water may sediment on the bottom of said chamber before entering the upstream path through the water processor vessel. This reduces the chances to an early clogging of the open structure of the zeolites.

In order to reduce a possibly remaining infection from living organisms or micro organisms a water treatment system according to the invention comprising such a water filter is characterised in that it comprises an ultra violet filter for radiating at least part of the water output by the water filter. An example of such an ultra violet filter is also known as "solar" filter UV. With such a solar filter micro and/or ultra filtration may even be omitted from the water filter, if desired.

At present the water filter, the water treatment system, the water processor vessel suited for application in the water filter, all according to the invention will be elucidated further together with their additional advantages, while reference is being made to the appended drawing, wherein similar components are being referred to by means of the same reference numerals. In the drawing:
Fig. 1 shows an perspective outline of the main parts of a preferred embodiment of the water filter according to the present invention;
Fig. 2 shows a schematic line view of the water filter according to fig. 1; and
Fig. 3 shows a schematic view of a water treatment system according to the invention comprising a water filter of figs. 1 and 2.

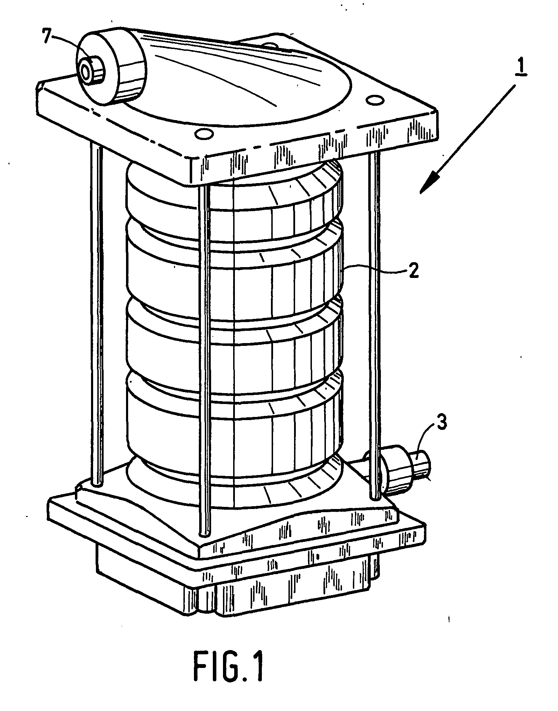

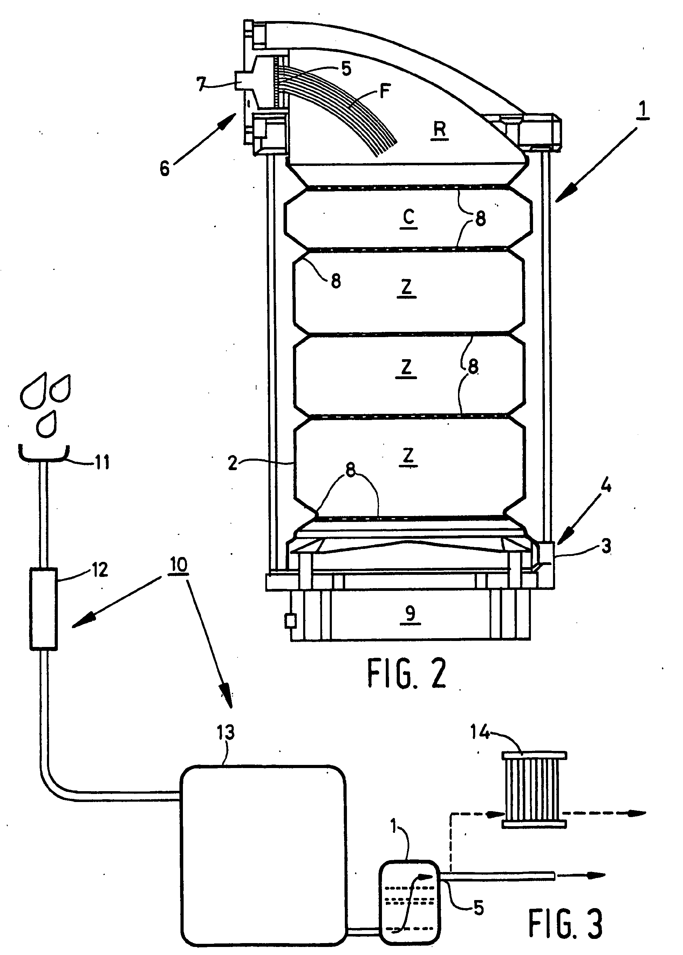

The water filter 1 as shown in figs. 1 and 2 comprises a water processor vessel 2 filled with filter constituents, generally but not necessary including a zeolite blend Z, activated carbon C and/or filtration elements F. The vessel 2 has a water input 3 at or near its lower side 4 and a water output 5 at or near its upper side 6, arranged such that an upstream water flow is achieved through the vessel 2. The zeolite blend Z may comprise one or more of the following types of zeolites: clinoptilolite, phillipsite, chabasite, erionite, heulandite, mordenite, analsite, natrolite, montmorillonite, edingtonite. Still further types of zeolites Z or more general zeolite blends possibly also containing additives, such as zand, and/or caviar agricole as disclosed in NL 1014497 may be applied, depending on the particular type or types of micro organisms, heavy metals, organic and/or inorganic compounds forming contaminants which have to be removed from the water flowing upstream through the vessel 2. The zeolites may be natural and/or synthetic, should have a constant quality, and should be pure and sufficiently hard in order not to pulverise to easy. The particular zeolite blend Z chosen is normally effective for removing those contaminants which are present at the side where the water filter 1 is positioned. This may in particular but not exclusively be in private households and/or small communities. Non limiting examples of micro organisms effectively removed by the filter constituents are: E-coli bacteria, faecal streptococci, legionella bacteria, cysts and several kinds of viruses. As heavy metals are in particular mentioned here: zinc, copper, lead, cadmium, iron etcetera. Inorganic compounds mentioned are: ammonium and chloride; and some organic compounds are pesticides, herbicides, aromatic compounds (PACs) and the like. Activated carbon C is also effective against at least these organic compounds. If impregnated such as with with silver the activated carbon is known to have an additional antibacterial effect. The zeolite blend Z and/or the activated carbon C are/is preferably included in one or more cartridges (not explicitly shown), which are together with the filtration elements F stacked, preferably in the order as shown in fig. 2. These cartridges may be releasable from the vessel 2 and may be exchanged easily by fresh or regenerated zeolite blend and/or carbon. The carbon cartridge C will then be placed on top of the zeolite cartridge(s) Z.

The filtration elements F may be filtration membranes which are usually flat or possibly filtration fibres, which may form strands. The filtration membranes in particular comprise micro filtration membranes and/or ultra filtration membranes. These respective filtration membranes are manufactured e.g. by a company named S.Search at Dedemsvaart, The Netherlands. The manufacture and use of these membranes are for example disclosed in WO 00102085, and EP-A-0998972, respectively, whose disclosures are incorporate here by reference thereto. The filtration membranes or fibres F are coupled to flow rate control means 7 to be elucidated hereinafter. The fibres F may have inner channels and an open porous structure such that processed water collected in a collecting room R in the upper part of the filter 1 is allowed to flow through the open outer surface to one or more inner channels and then to these control means 7. Preferably the collecting room R has an internally sloping shape, which is such that it allows air trapped inside the vessel 2 to be collected in the top of the room R and then driven out with the outgoing water flow, which makes the filter 1 self de-aerating.

In order to control or adjust the rate of the upstream water flow through the vessel 2 the filter or at least a water treatment system 10 wherein the water filter 1 is included comprises flow rate control means 7. In figs. 1 and 2 the flow rate control means 7 are provided at the upper side 6 of the filter 1 and simply formed by a cost effective automatic constant volume regulator 7 in order for it to provide water at a wanted quantity or rate. This regulator may at wish be constructed such that it maintains some overpressure of for example 0.1 bar in the vessel 2, which may be useful to prevent the occurrence of unwanted infections from outside the water filter 1. If wanted a tap may be coupled to the means 7, which may simply be of the open/closed type, because the automatic constant volume regulator 7 will control the outgoing water flow rate anyhow. Advantageously the processed water is always available at the point of use, directly after the processing by the filter 1.

The control means 7 may as far as necessary comprise more complicated microprocessor controlled means, wherein for example a flow sensor provides a water flow rate and/or water pressure dependent signal to the microprocessor, which controls the throughput of an orifice of a controllable valve of said means 7. The control means 7 generally control the upstream water flow through water processor vessel 2 at such a rate that a wanted low degree or concentration of the above mentioned contaminants in the processed and output water is achieved. The means 7 may also be provided at any wanted position upstream or downstream relative to the filter constituents. A position near the upper side 6 is however preferred because this will keep the filter constituents submerged, thus reducing the changes to an unwanted infection of the inside or content of the water filter 1. Additionally a water meter (not shown) can be added at an appropriate place in the system 10 for reading the amount of water treated by the filter 1. This provides an indication as to the moment whereon one or more of the filter constituents Z, C have to be replaced by new or regenerated constituents.

In order to promote a continuous and uniformly distributed upstream water flow in the vessel 2 measures have to taken by constructing uniform flow means 8, such as flow diverting or water flow spreading means. These means 8 may for example comprise one or more perforated plates 8 provided at wanted positions along the height and at the inside the vessel 2. A further simple example of flow diverting means 8 in the form of flow area restrictions 8 is also shown in figs. 1 and 2. These restrictions are formed by narrowed parts 8 of the inner area of the vessel inside wall. These consecutive narrowings 8 form respective water path extensions, which divert the water flow away from the inside wall of the vessel 2 back to the zeolite blend, every time such narrowed part 8 is encountered. This way upstream flowing water in the vessel 2 is prevented from channelling, that is escaping unprocessed along the inside wall of the vessel. This leads to a further quality improvement of the processed output water. The walls of the cartridges mentioned earlier are permeable for the input water and given the low upstream water pressure and controlled water rate the residence and contact time of the water in the vessel 2 with the filter constituents will be long, which increases the output water quality.

In order not to waist constituents, in particular zeolites Z the expected water flow rate of the control means 7 is related to the volume of the zeolite blend in the vessel 2. As a preferred practical example the ratio between the expected average output water flow rate in litres per minute and the volume in litres of the zeolite blend (Z) is 0.15 at the most. If for a household application an upper boundary of 180 litre per hour is assumed then 30 litres of zeolite at the most are sufficient. In one embodiment built the water filter 1 carries 9 litres of zeolite in a vessel being 75 cm high and having a diameter of approximately 30 cm. The water flow rate may then be 40 litres per hour, whereby the filter 1 then works at a water pressure of only 0.1 bar.

If the zeolite or zeolite blend Z is pre-treated before inclusion in the water filter 1 or if it is being regenerated after lapse of a useful period in the filter 1 with at least a sodium containing solution, then its micro filtration and ion exchange properties will improve. In this zeolite pre-treatment process critical parameters such as sodium concentration, temperature, treatment time and PH are combined in order to improve the zeolite filter filtration and ion exchange properties by at least a factor two. If these parameters are properly fine tuned then regeneration of the zeolite blend can be carried out at least ten times.

During research it is established that an average water flow rate of approximately 30-50 litre per hour provides optimised results in terms of heavy metal content remaining after treatment, as well as filtration effects established by the sufficiently long interaction of the contaminating particles in the water to be treated and the zeolites in the vessel 2.

In the upstream operating filter 1 the water flow after entering the water input 3 will be fine filtered with an approximately 75 µm filter (not shown). Particles having this size or a larger size tend to obstruct the open structure of the zeolites, which would degrade a proper filtration operation. Then the water enters a sedimentation chamber 9 and against the force of gravity, it flows through the filter constituents. Sediment particles are being caught by the gravity force and will thus precipitate on the bottom of the upstream operating filter 1 in the sedimentation chamber 9.

A water treatment system 10 such as exemplified in fig. 3 may principally comprises one or more water filters 1 arranged in parallel, if desired. The water filters 1 may also be included in well known piped water distribution networks and systems. In that case it may be necessary to apply a well known water pressure reduction valve. The system 10 as shown comprises gutter means 11 for collecting rain water and a pre-filter 12, which may be a mechanical filter. The pre-filter 12 is arranged for not passing particles having a size in the range from approximately 200 µm and upwards. A filter in the form of a sintered PE (polyethylene) filter has proven to be cost effective and operationally effective. The pre-filtered water is then provided to a storage tank 13 in order for large sediments to sediment therein. In this embodiment the stored water from the tank 13 is fed to the water filter 1. Optionally and/or depending on the filter constituents used in the vessel 2 an ultra violet or solar UV filter 14 may be coupled to the water output 5 for protecting the output water against infections, parasites and the like by radiating the output water. The filter 14 operates very effective, which is due to the fact that the amount of UV obstructing sediments in the output water is very low.

Table I hereafter provides purification performance test results of treated output water in three types of tests, wherein the above described water filter 1, called RainPC, is used without filtration elements (type STB), with micro membrane filtration (type STM) and with ultra membrane filtration (type STU) respectively. In the table X denotes that the remaining contamination concentrations concerned are in accordance with the World Health Organisation regulations. The test results reveal an extremely good result over the full range of contaminants, but in particular in the field of disease provoking micro organisms.

Whilst the above has been described with reference to essentially preferred embodiments and best possible modes it will be understood that these embodiments are by no means to be construed as limiting examples, because various modifications, features and combination of features falling within the scope of the appended claims are now within reach of the skilled person.

**Tabel I**

| **Contaminants Removed** | **RainPC STB** | **RainPC STM** | **RainPC STU** |
|---|---|---|---|
| *Microorganisms* | | | |
| E-coli, faecal streptocci | 99.9 % | 99.999999 % | 99.999999999 % |
| Cysts | Test pending | 99.999 % | 99.999999 % |
| Legionella | 99.9 % | 99.999999 % | 99.999999999 % |
| Viruses | - | - | 99.9 % |
| *Heavy metals* | | | |
| Zinc | X | X | X |
| Copper | X | X | X |
| Lead | X | X | X |
| Cadmium | X | X | X |

| *Inorganic compounds* | | | |
|---|---|---|---|
| Ammonium | X | X | X |
| Chloride | X | X | X |

| *Organic* compounds | | | |
|---|---|---|---|
| Pesticids and herbicids | X | X | X |
| Aromatic compounds (PAC) | X | X | X |
| Taste/odour | X | X | X |
| Colour (Pt/Co) < 20 mg/l | X | X | X |
| Sediment (turbidity <4 FTE) | X | X | X |

## Claims

1. A water filter (1) comprising a water processor vessel (2) filled with filter constituents, including activated carbon (C) and filtration elements (F), which water processor vessel (2) has a water input (3) near its lower side (4) and a water output (5) near its upper side (6) for providing an upstream water flow through said vessel (2), the water filter (1) further comprising flow rate control means (7) for controlling the upstream water flow through said vessel (2), **characterised in that** the filter constituents further comprise a zeolite blend (Z), that the filtration elements (F) are membrane filters, including micro membrane and/or ultra membrane fibres, and that the flow rate control means (7) are coupled to the upper side (6) of the water processor vessel (2) for controlling the upstream water flow through said vessel (2) at such a rate that a wanted low degree of full spectrum contamination of processed output water is achieved.

2. The water filter (1) according to claim 1, **characterised in that** the flow rate of the control means (7) is controlled such that only a water output pressure which exceeds a minimum output water pressure threshold enables the water filter (1) to output filtered water.

3. The water filter (1) according to one of the claims 1-2, **characterised in that** the water filter (1) comprises means (8) arranged for promoting a uniform upstream water flow through the water processor vessel (2).

4. The water filter (1) according to claim 3, **characterised in that** said uniform water flow means (8) are flow diverting means (8).

5. The water filter (1) according to claim 4, **characterised in that** the flow diverting means (8) are embodied as water flow area restrictions (8).

6. The water filter (1) according to claim 5, **characterised in that** at least the inner area of the inside wall of the vessel (2) is narrowed.

7. The water filter (1) according to one of the claims 1-6, **characterised in that** the setting of the expected water flow rate of the control means (7) is related to the volume of the zeolite blend (Z) of the vessel (2).

8. The water filter (1) according to claim 7, **characterised in that** the setting of the expected water flow rate of the control means (7) is such that the ratio between the expected average water flow rate in litres per minute and the volume in litres of the zeolite blend (Z) is 0.15 at the most.

9. The water filter (1) according to claim 8, **characterised in that** the volume of the zeolite blend (Z) in the water processor vessel (2) lies between 3 and 30 litres, and in particular lies around 9 litres.

10. The water filter (1) according to one of the claims 1-9, **characterised in that** the zeolite blend (Z) and/or the activated carbon (C) are/is included in one or more cartridges, which are releasable from the vessel (2).

11. The water filter (1) according to claim 10, **characterised in that** at least one of the cartridges contains a zeolite (Z) comprises clinoptilolite, bentonite, phillipsite, chabasite, erionite, heulandite, mordenite, analsite, natrolite, montmorillonite and/or edingtonite.

12. The water filter (1) according to claim 11, **characterised in that** the zeolite (Z) is pre-treated with a sodium containing solution at certain temperature, PH and during a specific treatment time.

13. The water filter (1) according to one of the claims 10-12, **characterised in that** the water filter (1) comprises a carbon cartridge (C) placed on top of the zeolite cartridge (Z).

14. The water filter (1) according to one of the claims 1-13, **characterised in that** at least a part of the activated carbon (C) is impregnated with silver.

15. The water filter (1) according to one of the claims 1-14, **characterised in that** the water filter (1) comprises a sedimentation chamber (9) at the bottom of the water filter (1).

16. A water treatment system (10) comprising one or more water filters (1) according to one of the claims 1-15, the water filter (1) comprising a water processor vessel (2) filled with filter constituents, including activated carbon (C) and filtration elements (F), which water processor vessel. (2) has a water input (3) near its lower side (4) and a water output (5) near its upper side (6) for providing an upstream water flow through said vessel (2), the water filter (1) further comprising flow rate control means (7) for controlling the upstream water flow through said vessel (2), **characterised in that** the filter constituents further comprise a zeolite blend (Z), that the filtration elements (F) are membrane filters, including micro membrane and/or ultra membrane fibres, that the flow rate control means (7) are coupled to the upper side (6) of the water processor vessel (2) for controlling the upstream water flow through said vessel (2) at such a rate that a wanted low degree of full spectrum contamination of processed output water is achieved, and that the water treatment system (10) comprises an ultra violet filter (14) for radiating at least part of the water output by the water filter (1).

17. A water processor vessel (2) filled with filter constituents, including activated carbon (C) and filtration elements (F), which water processor vessel (2) has a water input (3) near its lower side (4) and a water output (5) near its upper side (6) for providing an upstream water flow through said vessel (2), the water vessel (1) further comprising flow rate control means (7) for controlling the upstream water flow through said vessel (2), **characterised in that** the filter constituents further comprise a zeolite blend (Z), that the filtration elements (F) are membrane filters, including micro membrane and/or ultra membrane fibres, and that the flow rate control means (7) are coupled to the upper side (6) of the water processor vessel (2) for controlling the upstream water flow through said vessel (2) at such a rate that a wanted low degree of full spectrum contamination of processed output water is achieved.

## Patentansprüche

1. Wasserfilter (1), umfassend ein Wasserbehandlungsgefäß (2), das mit Filterbestandteilen, einschließlich Aktivkohle (C) und Filterungselementen (F) gefüllt ist, wobei das Wasserbehandlungsgefäß (2) einen Wasserzugang (3) in der Nähe seiner unteren Seite (4) und einen Wasserausgang (5) in der Nähe seiner oberen Seite (6) aufweist, um einen steigenden Wasserstrom durch das Gefäß (2) bereitzustellen, wobei der Wasserfilter (1) weiterhin ein Fließgeschwindigkeitssteuermittel (7) umfasst, um den steigenden Wasserstrom durch das Gefäß (2) zu steuern, **dadurch gekennzeichnet dass** die Filterbestandteilen weiterhin einem Zeolithgemisch (Z) umfassen, dass die Filterungselemente (F) Membranfilter sind, die Mikromembran- und/oder Ultramembranfasern beinhalten, und dass das Fließgeschwindigkeitssteuermittel (7) mit der oberen Seite (6) des Wasserbehandlungsgefäßes (2) gekoppelt ist um den steigenden Wasserstrom durch das Gefäß (2) auf eine solche Geschwindigkeit zu steuern, dass ein erwünschter niedriger Grad der Gesamtspektrumsverschmutzung des behandelten ausgegebenen Wassers erzielt wird.

2. Wasserfilter (1) nach Anspruch 1, **dadurch gekennzeichnet, dass** die Fließgeschwindigkeit des Steuermittels (7) so gesteuert wird, dass nur ein Wasserausgangsdruck, der eine Mindestausgangswasserdruckschwelle übersteigt, den Wasserfilter (1) befähigt, gefiltertes Wasser auszugeben.

3. Wasserfilter (1) nach einem der Ansprüche 1-2, **dadurch gekennzeichnet, dass** der Wasserfilter (1) Mittel umfasst, die dazu eingerichtet sind, einen gleichmäßigen steigenden Wasserstrom durch das Wasserbehandlungsgefäß (2) zu fördern.

4. Wasserfilter (1) nach Anspruch 3, **dadurch gekennzeichnet, dass** die Mittel (8) für einen gleichmäßigen Wasserstrom Stromumlenkmittel (8) sind.

5. Wasserfilter (1) nach Anspruch 4, **dadurch gekennzeichnet, dass** die Stromumlenkmittel (8) als Wasserstromflächenbeschränkungen (8) ausgeführt sind.

6. Wasserfilter (1) nach Anspruch 5, **dadurch gekennzeichnet, dass** zumindest die innere Fläche der Innenwand des Gefäßes (2) verengt ist.

7. Wasserfilter (1) nach einem der Ansprüche 1-6, **dadurch gekennzeichnet, dass** die erwartete Wasserfließgeschwindigkeit des Steuermittels (7) mit dem Volumen des Zeolithgemischs (Z) des Gefäßes (2) in Zusammenhang steht.

8. Wasserfilter (1) nach Anspruch 7, **dadurch gekennzeichnet, dass** das Verhältnis zwischen der erwarteten durchschnittlichen Wasserfließgeschwindigkeit in Liter pro Minute und dem Volumen in Liter des Zeolithgemischs (Z) höchstens 0,15 beträgt.

9. Wasserfilter (1) nach Anspruch 8, **dadurch gekennzeichnet, dass** das Volumen des Zeolithgemischs (Z) im Wasserbehandlungsgefäß (2) zwischen 3 und 30 Litern liegt und insbesondere um 9 Liter liegt.

10. Wasserfilter (1) nach einem der Ansprüche 1-9, **dadurch gekennzeichnet, dass** das Zeolithgemisch (Z) und/oder die Aktivkohle (C) in einer oder mehreren Patronen enthalten sind/ist, die vom Gefäß (2) lösbar sind.

11. Wasserfilter (1) nach Anspruch 10, **dadurch gekennzeichnet, dass** zumindest eine der Patronen einen Zeolith (Z) enthält, der Clinoptilolit, Bentonit, Phillipsit, Chabasit, Erionit, Heulandit, Mordenit, Analsit, Natrolit, Montmorillonit und/oder Edingtonit umfasst.

12. Wasserfilter (1) nach Anspruch 11, **dadurch gekennzeichnet, dass** der Zeolith (Z) bei einer bestimmten Temperatur, einem bestimmten pH-Wert und während einer bestimmten Behandlungszeit mit einer natriumhaltigen Lösung vorbehandelt wird.

13. Wasserfilter (1) nach einem der Ansprüche 10-12, **dadurch gekennzeichnet, dass** der Wasserfilter (1) eine Kohlenstoffpatrone (C) umfasst, die über der Zeolithpatrone (Z) angeordnet ist.

14. Wasserfilter (1) nach einem der Ansprüche 1-13, **dadurch gekennzeichnet, dass** zumindest ein Teil der Aktivkohle (C) mit Silber imprägniert ist.

15. Wasserfilter (1) nach einem der Ansprüche 1-14, **dadurch gekennzeichnet, dass** der Wasserfilter (1) eine Absetzkammer (9) an der Unterseite des Wasserfilters (1) umfasst.

16. Wasserbehandlungssystem (10), umfassend einen oder mehreren Wasserfilter (1) nach einem der Ansprüche 1-15, wobei der Wasserfilter (1) ein Wasserbehandlungsgefäß (2) umfasst, das mit Filterbestandteilen, einschließlich Aktivkohle (C) und Filterungselementen (F) gefüllt ist, wobei das Wasserbehandlungsgefäß (2) einen Wasserzugang (3) in der Nähe seiner unteren Seite (4) und einen Wasserausgang (5) in der Nähe seiner oberen Seite (6) aufweist, um einen steigenden Wasserstrom durch das Gefäß (2) bereitzustellen, wobei das Wasserfilter (1) weiterhin ein Fließgeschwindigkeitssteuermittel (7) umfasst, um den steigenden Wasserstrom durch das Gefäß (2) zu steuern, **dadurch gekennzeichnet dass** die Filterbestandteilen weiterhin einem Zeolithgemisch (Z) umfassen, dass die Filterungselemente (F) Membranfilter sind, die Mikromembran- und/oder Ultramembranfasern beinhalten, dass das Fließgeschwindigkeitssteuermittel (7) mit der oberen Seite (6) des Wasserbehandlungsgefäßes (2) gekoppelt ist um den steigenden Wasserstrom durch das Gefäß (2) auf eine solche Geschwindigkeit zu steuern, dass ein erwünschter niedriger Grad der Gesamtspektrumsverschmutzung des behandelten ausgegebenen Wassers erzielt wird, und dass das Wasserbehandlungssystem (10) einen Ultraviolettfilter (14) umfasst, um zumindest einen Teil des Wassers, das durch den Wasserfilter (1) ausgegeben wird, zu bestrahlen.

17. Wasserbehandlungsgefäß (2) das mit Filterbestandteilen, einschließlich Aktivkohle (C) und Filterungselementen (F) gefüllt ist, wobei das Wasserbehandlungsgefäß (2) einen Wasserzugang (3) in der Nähe seiner unteren Seite (4) und einen Wasserausgang (5) in der Nähe seiner oberen Seite (6) aufweist, um einen steigenden Wasserstrom durch das Gefäß (2) bereitzustellen, wobei der Wasserfilter (1) weiterhin ein Fließgeschwindigkeitssteuermittel (7) umfasst, um den steigenden Wasserstrom durch das Gefäß (2) zu steuern, **dadurch gekennzeichnet dass** die Filterbestandteilen weiterhin einem Zeolithgemisch (Z) umfassen, dass die Filterungselemente (F) Membranfilter sind, die Mikromembran- und/oder Ultramembranfasern beinhalten, und dass das Fließgeschwindigkeitssteuermittel (7) mit der oberen Seite (6) des Wasserbehandlungsgefäßes (2) gekoppelt ist um den steigenden Wasserstrom durch das Gefäß (2) auf eine solche Geschwindigkeit zu steuern, dass ein erwünschter niedriger Grad der Gesamtspektrumsverschmutzung des behandelten ausgegebenen Wassers erzielt wird.

## Revendications

1. Filtre à eau (1) comportant une cuve de traitement d'eau (2) remplie de constituants de filtre, inclusivement du carbone activé (C) et des éléments de filtration (F), la cuve de traitement d'eau (2) comporte une arrivée d'eau (3) près de sa face inférieure (4) et une sortie d'eau (5) près de sa face supérieure (6) pour assurer un écoulement d'eau amont dans ladite cuve (2), le filtre à eau (1) comporte des moyens de contrôle de vitesse d'écoulement (7) pour contrôler l'écoulement d'eau amont dans ladite cuve (2), **caractérisé en ce que** les constituants de filtre comporte un mélange de zéolite (Z), **en ce que** les éléments de filtration (F) sont des filtres à membrane comportant des fibres de micro-membrane et/ou des filtres d'ultra-membrane, et **en ce que** les moyens de contrôle de vitesse d'écoulement (7) sont couplés à la face supérieure (6) de la cuve de traitement d'eau (2) pour contrôler l'écoulement d'eau amont dans ladite cuve (2) à une vitesse telle qu'un faible degré désiré de contamination de spectre intégral de l'eau sortante traitée soit obtenu.

2. Filtre à eau (1) selon la revendication 1, **caractérisé en ce que** la vitesse d'écoulement du moyen de contrôle (7) est contrôlée de manière à ce que seule une pression d'eau sortante excédant un seuil minimal de pression d'eau sortante permet au filtre à eau (1) de produire de l'eau filtrée.

3. Filtre à eau (1) selon une des revendications 1-2, **caractérisé en ce que** le filtre à eau (1) comporte des moyens (8) conçus de manière à favoriser un écoulement d'eau amont uniforme dans la cuve de traitement d'eau (2).

4. Filtre à eau (1) selon la revendication 3, **caractérisé en ce que** lesdits moyens d'écoulement uniforme d'eau (8) sont des moyens de dérivation d'écoulement (8).

5. Filtre à eau (1) selon la revendication 4, **caractérisé en ce que** les moyens de dérivation d'écoulement (8) sont réalisés sous forme de restrictions de zone d'écoulement (8).

6. Filtre à eau (1) selon la revendication 5, **caractérisé en ce qu'**au moins la zone interne de la paroi intérieure de la cuve (2) est rétrécie.

7. Filtre à eau (1) selon une des revendications 1-6, **caractérisé en ce que** la vitesse d'écoulement d'eau escomptée des moyens de contrôle (7) est relative au volume du mélange de zéolite (Z) de la cuve (2).

8. Filtre à eau (1) selon la revendication 7, **caractérisé en ce que** le ratio entre la vitesse d'écoulement d'eau moyenne escomptée en litres par minute et le volume en litres de mélange de zéolite (Z) est de 0,15 au maximum.

9. Filtre à eau (1) selon la revendication 8, **caractérisé en ce que** le volume du mélange de zéolite (Z) dans la cuve de traitement d'eau (2) est compris entre 3 et 30 litres et en particulier se situe à environ 9 litres.

10. Filtre à eau (1) selon une des revendications 1-9, **caractérisé en ce que** le mélange de zéolite (Z) et/ou le carbone activé (C) est/sont inclus dans une cartouche ou plus qui peuvent être dissociées de la cuve (2).

11. Filtre à eau (1) selon la revendication 10, **caractérisé en ce qu'**au moins une des cartouches contient une zéolite (Z) contenant de la clinoptilolite, de la bentonite, de la phillipsite, de la chabasite, de l'érionite, de l'heulandite, de la mordénite, de l'analsite, de la natrolite, de la montmorillonite et/ou de l'edingtonite.

12. Filtre à eau (1) selon la revendication 11, **caractérisé en ce que** la zéolite (Z) est prétraitée avec une solution contenant du sodium à une certaine température, un certain PH et pendant un temps de traitement spécifique.

13. Filtre à eau (1) selon une des revendications 10-12, **caractérisé en ce que** le filtre à eau (1) contient une cartouche de carbone (C) placée sur le dessus de la cartouche de zéolite (Z).

14. Filtre à eau (1) selon une des revendications 1-13, **caractérisé en ce qu'**au moins une partie du carbone activé (C) est imprégnée d'argent.

15. Filtre à eau (1) selon une des revendications 1-14, **caractérisé en ce que** le filtre à eau (1) comprend une chambre de sédimentation (9) au fond du filtre à eau (1).

16. Système de traitement d'eau (10) comportant un filtre à eau (1) selon une des revendications 1-15, le filtre à eau (1) comportant une cuve de traitement d'eau (2) remplie de constituants de filtre, inclusivement du carbone activé (C) et des éléments de filtration (F), la cuve de traitement d'eau (2) comporte une arrivée d'eau (3) près de sa face inférieure (4) et une sortie d'eau (5) près de sa face supérieure (6) pour assurer un écoulement d'eau amont dans ladite cuve (2), le filtre à eau (1) comporte des moyens de contrôle de vitesse d'écoulement (7) pour contrôler l'écoulement d'eau amont dans ladite cuve (2), **caractérisé en ce que** les constituants de filtre comporte un mélange de zéolite (Z), **en ce que** les éléments de filtration (F) sont des filtres à membrane comportant des fibres de micro-membrane et/ou des filtres d'ultra-membrane, et **en ce que** les moyens de contrôle de vitesse d'écoulement (7) sont couplés à la face supérieure (6) de la cuve de traitement d'eau (2) pour contrôler l'écoulement d'eau amont dans ladite cuve (2) à une vitesse telle qu'un faible degré désiré de contamination de spectre intégral de l'eau sortante traitée soit obtenu, et **en ce que** le système de traitement d'eau (10) comporte un filtre à ultraviolets (14) permettant d'irradier au moins une partie de l'eau sortante par le filtre à eau (1).

17. Cuve de traitement d'eau (2) remplie de constituants de filtre, inclusivement du carbone activé (C) et des éléments de filtration (F), la cuve de traitement d'eau (2) comporte une arrivée d'eau (3) près de sa face inférieure (4) et une sortie d'eau (5) près de sa face supérieure (6) pour assurer un écoulement d'eau amont dans ladite cuve (2), le filtre à eau (1) comporte des moyens de contrôle de vitesse d'écoulement (7) pour contrôler l'écoulement d'eau amont dans ladite cuve (2), **caractérisé en ce que** les constituants de filtre comporte un mélange de zéolite (Z), **en ce que** les éléments de filtration (F) sont des filtres à membrane comportant des fibres de micro-membrane et/ou des filtres d'ultra-membrane, et **en ce que** les moyens de contrôle de vitesse d'écoulement (7) sont couplés à la face supérieure (6) de la cuve de traitement d'eau (2) pour contrôler l'écoulement d'eau amont dans ladite cuve (2) à une vitesse telle qu'un faible degré désiré de contamination de spectre intégral de l'eau sortante traitée soit obtenu.
